# EUROPEAN PATENT APPLICATION

(11) **EP 1 207 521 A1**
(43) Date of publication of application: **22.05.2002**
(21) Application number: 01204380.8
(22) Date of filing: 16.11.2001
(51) Int. Cl.: G11B 5/56

(54) **Read/write device with hinging fine-positioning movement**

(30) Priority: 16.11.2000 NL 1016629
(71) Applicant: OnStream Holding B.V., 5652 AC Eindhoven (NL)
(72) Inventor: Ycas, John A., Boulder, Colorado 80302 (US)
(74) Representative: Prins, Adrianus Willem

(57) **Abstract**

A device for reading and/or writing a magnetic tape, comprising a read/write element fastened to a supporting arm, which supporting arm is coupled with a translation member by means of a hinge. The translation member can move the supporting arm in the direction transverse to the passage direction of the tape, so that the read/write element can carry out therewith a coarse transverse movement with respect to the tape. The supporting arm can hinge through a relatively small angle with respect to the translation member so as to be able to carry out therewith a fine-positioning movement on the coarse movement. The hinge is formed by a system of springy elements which extend according to substantially transversely intersecting planes, so that a hinging is obtained around an intersecting line of the two planes, and by connecting means, which of each of the elements couple one end with the supporting arm and an opposite end with the translation member. The system may comprise a central part which forms a connection between the springy elements.

## Description

The invention relates to a device for reading and/or writing a magnetic tape, comprising a read/write element fastened to a supporting arm, which supporting arm is coupled with a translation member by means of a hinge, which translation member can move the supporting arm in the direction transverse to the passage direction of the tape, so that the read/write element can carry out therewith a coarse transverse movement with respect to the tape, and through which hinge the supporting arm can hinge by means of a fine regulation through a relatively small angle with respect to the translation member so as to be able to carry out therewith a fine-positioning movement on the coarse movement.

Such a device is known from American patent US-A-5,726,834. The translation member comprises a leadscrew and nut. The arm is hingedly connected with the nut, so that it can be moved along the leadscrew. The above patent describes a device which hinges with a so-called "living hinge". Here a hinge is formed from two elements connected by means of a relatively thin strip, which has the result that, because one of them is fastened to the supporting arm and the other to the spindle nut, hinging becomes possible on a thus formed folding line. In general, hinging as used in such a device has to meet a number of very specific requirements to enable an accurate fine-positioning movement in a servo loop. Indeed, the accuracy of the hinge largely determines the accuracy of the fine-positioning movement carried out. Here it is further important that the hinge is very rigid in the directions perpendicular to the hinge axis, so as to cause the device to show as little resonance as possible. It is also important that the energy dissipation in the hinge is minimal. The hinge used in the above patent can only partly meet the above-mentioned requirements and additionally has the drawback that the assembly of the hinge is rather complex. The invention has for its object to avoid such drawbacks and to provide an improved read/write device, in which for a long time a very good and constant hinge effect is obtained, which is simple and cheap to produce, and the assembly of which is very simple.

This object is achieved by a read/write device as described in the opening paragraph, in which the hinge is formed by a system of springy elements, which extend according to substantially transversely intersecting planes, so that a hinging is obtained around the intersecting line of the above planes, and by connecting means, which of each of the elements couple one end with the supporting arm and an opposite end with the translation member.

The springy elements, in use, cause practically no energy losses, are very rigid in the directions perpendicular to the hinge axis and are very cheap to produce.

To increase production efficiency, the system can be integrally formed and comprise a central part which forms a connection between the springy elements. Preferably, the central part is curved and each of the springy elements comprises an end part with an orientation substantially transverse to the plane according to which the element extends, which end parts are folded toward each other. This central part and these end parts increase the area of engagement of the springy elements on which a coupling with the connecting means can be effected and thus promote a better connection. The system may have a substantially equal flexibility along each of the planes.

The springy elements may, seen in the direction of the intersecting line, extend alternatingly according to different plane orientations. The connecting means of the hinge may comprise shell-shaped plastic segments, each of the segments being located substantially diametrically with respect to a central axis, which plastic segments extend into a correspondingly formed opening of the supporting arm and the translation member, such that an outer circumferential surface of one segment coincides and is connected with a wall of the supporting arm and that an outer circumferential surface of another segment coincides and is connected with a wall of the translation member. When assembling the read/write device, such a hinge can simply be mounted integrally, with the result that the production costs are reduced. On the outer circumferential side the shell-shaped plastic elements may be provided with a radially oriented cam-shaped element. A cam-shaped element may comprise a tangentially oriented end part. Such cam shapes are suitable for enlarging a glue surface and increasing rigidity. The springy elements may be formed from leaf spring material.

The invention will be explained in more detail with reference to the drawings, in which:
Figure 1 is a diagrammatic perspective view of a read/write device in disassembled parts according to the invention; and
Figure 2 is a diagrammatic side view of the read/write device of Figure 1;
Figure 3 is a diagrammatic perspective view of a hinge in disassembled parts of a read/write device according to the invention; and
Figure 4 is a diagrammatic side view of the hinge of Figure 3.

In the Figures similar or corresponding parts are denoted by the similar reference numerals.

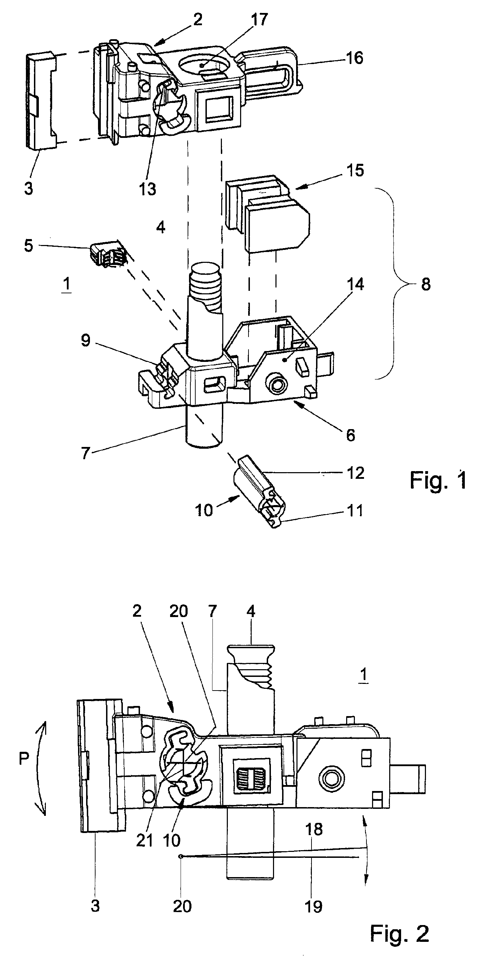

In Figure 1 a read/write device 1 is shown. Arranged on a supporting arm 2 is a magnetic read/write element 3, briefly referred to as magnetic head. Magnetic head 3 can move in the direction parallel to leadscrew 4. This direction corresponds with a direction transverse to the passage direction of a magnetic tape (not shown), so that by means of magnetic head 3 different tracks on the tape can be read out, by carrying out a transverse movement with respect to the passage direction of the tape. Leadscrew 4 induces a relatively coarse transverse movement, which is transmitted by a spindle nut 5 which is rigidly connected with a carriage 6. Leadscrew 4 is passed through a hollow shaft 7. Hollow shaft 7 is rigidly connected with carriage 6 and serves to guide carriage 6 along leadscrew 4. Carriage 6, spindle nut 5 and leadscrew 4 together form a translation member 8, which can move supporting arm 2 in the direction transverse to the passage direction of the tape. Carriage 6 has a wall 9 to which a cylindrical hinge 10 is fastened. Cylindrical hinge 10 comprises a segment 11 and a second segment 12 located diametrically with respect to a cylinder axis, which segments can hinge with respect to each other. Segment 11 is glued to wall 9 of the carriage. Segment 12 is glued to wall 13 of the supporting arm, so that supporting arm 2 is hingedly coupled with translation member 8.

On the side opposing wall 9 relative to leadscrew 4, carriage 6 comprises a fastening part 14 for fastening two magnets 15, between which a coil element 16 of arm 2 can move. The coil 16 forms part of a servo loop, which controls the fine-positioning movement of arm 2. Further included in the servo loop is an optical element (not shown), which detects the position of head 3 with respect to the tape. The servo loop induces a rotation of arm 2 around hinge 10, as a result of which magnetic head 3 can carry out a slight extra movement in the above-described transverse direction. Arm 2 comprises an opening 17, through which hollow shaft 7 is passed. Opening 17 is slightly larger than the cross section of hollow shaft 7, so that with respect thereto arm 2 can move with some play.

Figure 2 is a diagrammatic side view of the read/write device 1 of Figure 1. Arrow P shows how magnetic head 3 can carry out a slight extra movement in the above-described transverse direction. This movement is diagrammatically shown in the drawings by lines 18 and 19, which show a solid axis of movable arm 2 and of carriage 6, respectively. Axes 18, 19 intersect at hinge point 20, which coincides with an intersection point of springy leaf spring elements 21 of hinge 10. For clearness' sake, this hinge point 20 is shown in Figure 2 in a displaced position.

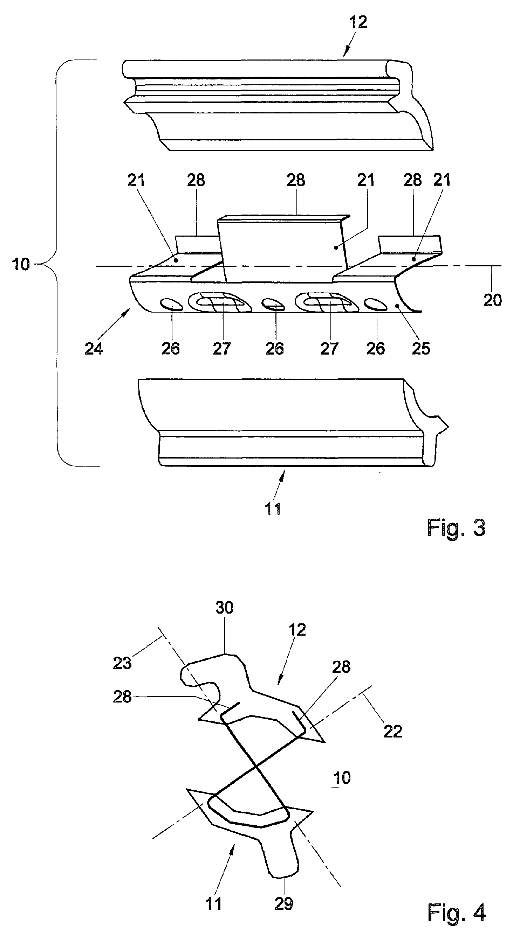

Figure 3 is a diagrammatic perspective view of a hinge 10 shown in disassembled parts, with a side view thereof in Figure 4. Hinge 10 comprises two shell-shaped plastic segments 11 and 12, which, as shown in Figure 4, together have a substantially cylindrical shape, each of which segments 11 and 12 being located substantially diametrically with respect to a cylinder axis 20. In Figure 3 this cylinder axis 20 is shown by a broken line, which forms the intersecting line of the two planes 22 and 23 (see Figure 4) according to which springy leaf spring elements 21 extend. According to a preferred embodiment, shown in Figure 3, springy leaf spring elements 21 form an integral system 24 of leaf spring material, with a central part 25 which forms a connection between leaf spring elements 21. Central part 25 comprises holes 26 and 27. Holes and recesses 26 resp. 27 serve to connect spring system 24 in an injection molding process with a segment 11, as shown in Figure 4. The segment is formed to this end around this central part 25 by injection molding.

Recesses 27 serve to locate system 24 in the mold and to form the desired rigidity and curvature of central part 25. Leaf spring elements 21 extend alternatingly according to different plane orientations 22, 23 and have end parts 28 with an orientation substantially transverse to the respective plane orientations. System 24 shows a substantially equal flexibility along each of planes 22, 23. The above measures improve the symmetric effect of hinge 10 and contribute to an improved balancing of supporting arm 2, as a result of which the read/write device has a high shock resistance and the fine-positioning movement can be carried out very accurately.

Figure 4 shows how the shell-shaped plastic segments 11, 12 are provided on the outer circumferential side with radially oriented cam-shaped elements 29, 30. Cam-shaped element 30 comprises a tangentially oriented end part. Such cam shapes 29, 30 are suitable for enlarging a glue surface and increasing rigidity. The asymmetric design of the cam shapes of segments 11 and 12 with respect to each other is advantageous in the assembly of hinge 10 in read/write device 1.

It will be clear to those skilled in the art that the invention is not limited to the exemplary embodiments described with reference to the drawings but may comprise all kinds of variations thereof. Thus, the above description of the drawings discusses an embodiment with leaf spring elements 21, with two plane orientations 22, 23. It may also be possible to use several plane orientations, for instance a hinge in which springy elements extend according to three transversely intersecting planes. It may further be possible to use a spring system 24, without shell-shaped plastic parts, but to couple the spring elements directly with supporting arm 2 and carriage 6. Such variations are deemed to fall within the scope of protection of the appended claims.

## Claims

1. A device for reading and/or writing a magnetic tape, comprising a read/write element fastened to a supporting arm, which supporting arm is coupled with a translation member by means of a hinge, which translation member can move the supporting arm in the direction transverse to the passage direction of the tape, so that the read/write element can carry out therewith a coarse transverse movement with respect to the tape, and through which hinge the supporting arm can hinge by means of a fine regulation through a relatively small angle with respect to the translation member so as to be able to carry out therewith a fine-positioning movement on the coarse movement, **characterized in that** the hinge is formed by a system of springy elements which extend according to substantially transversely intersecting planes, so that a hinging is obtained around the intersecting line of the above planes, and by connecting means, which of each of the elements couple one end with the supporting arm and an opposite end with the translation member.

2. A device for reading and/or writing a magnetic tape according to claim 1, **characterized in that** the system is integrally formed and comprises a central part which forms a connection between the springy elements.

3. A device for reading and/or writing a magnetic tape according to claim 2, **characterized in that** the central part is curved.

4. A device for reading and/or writing a magnetic tape according to claim 2 or 3, **characterized in that** each of the springy elements comprises an end part with an orientation substantially transverse to the plane according to which the element extends, which end parts are folded towards each other.

5. A device for reading and/or writing a magnetic tape according to at least one of the preceding claims, **characterized in that** along each of the planes the system has a substantially equal flexibility.

6. A device for reading and/or writing a magnetic tape according to at least one of the preceding claims, **characterized in that** the springy elements, seen in the direction of the intersecting line, extend alternatingly according to different plane orientations.

7. A device for reading and/or writing a magnetic tape according to at least one of the preceding claims, **characterized in that** the connecting means of the hinge comprise shell-shaped plastic segments, each of the segments being located substantially diametrically with respect to a central axis, which plastic segments extend into a correspondingly formed opening of the supporting arm and the translation member, such that an outer circumferential surface of one segment coincides and is connected with a wall of the supporting arm and that an outer circumferential surface of another segment coincides and is connected with a wall of the translation member.

8. A device according to claim 5, **characterized in that** the shell-shaped plastic elements are provided on the outer circumferential side with a radially oriented cam-shaped element.

9. A device according to claim 8, **characterized in that** a cam-shaped element comprises a tangentially oriented end part.

10. A device according to at least one of the preceding claims, **characterized in that** the springy elements are formed from leaf spring material.
